# EUROPEAN PATENT SPECIFICATION

(11) **EP 1 542 425 B1**
(45) Date of publication and mention of the grant of the patent: **17.03.2010**
(21) Application number: 03293150.3
(22) Date of filing: 12.12.2003
(51) Int. Cl.: H04L 29/06, H04L 29/12

(54) **Method for autoconfiguring CPEs in DSL networks**
Verfahren zur Autokonfiguration eines CPE in einem DSL-Netzwerk
Méthode de autoconfiguration de CPEs sur un réseau DSL

(43) Date of publication of application: 15.06.2005
(73) Proprietor: Alcatel Lucent, 75008 Paris (FR)
(72) Inventor: T'joens, Yves Robert Fernand, 8200 Sint Michiels-Brugge (BE); de Clercq, Jeremy Nicolas Jean Herman, 9000 Gent (BE)
(74) Representative: Narmon, Gisèle Marie Thérèse

(56) References cited:
- WO-A-00/56018
- WO-A-02/03657
- WO-A-03/075517
- US-A1- 2003 039 244

## Description

### Field of the invention

The present invention relates to a method for autoconfiguring Customer Premises Equipment (CPE) devices in DSL aggregation networks.

### Background of the invention

Digital Subscriber Line Access Aggregation networks are currently usually based on Asynchronous Transfer Mode (ATM). The Customer Premises equipment device establishes a layer 2/2.5 connection to an aggregation device such as a Broadband Remote Access Server (BRAS) or to an Internet Service Provider (ISP). A DSL Customer Premises Equipment device can be autoconfigured with an ATM permanent virtual connection for example via Interim Local Management Interface (ILMI) that uses Simple Network Management Protocol (SNMP).

Devices and methods known in prior art can only be used in ATM networks for autoconfiguration of Customer Premises Equipment devices. The protocols used by prior art solutions are complicated and not widely used yet. The use of permanent virtual connections in prior art solutions is not very flexible as in document WO 02/078283.

### Objects of the invention

The object of the invention is to disclose a method for autoconfiguration of CPE devices is usable in access aggregation networks that do not make use of ATM.

### Summary of the invention

The object of the invention is achieved by a method for auto-configuration of Customer Premises Equipment (CPE) devices in a digital subscriber line access aggregation network, described by claim 1. In the context of the present invention "IP-protocols" is used to denote an IP protocol suite comprising protocols like DHCP, DNS, HTTP, etc. These protocols are used for auto-configuration of the Customer Premises Equipment.

In a preferred embodiment, DHCP or DNS is used as IP auto-configuration protocol. IP auto-configuration protocols such as DHCP or DNS are very widely used in other contexts. DHCP is used to configure layer 3 information of customers in local area networks and DNS is used to configure some layer 3 information of customers in Internet Service Provider Networks. The mechanisms proposed have the additional advantage that they still can be used whenever other technologies than ATM, for example Ethernet, will be used in Access aggregation networks.

Preferably a layer 2 connection is established between a Digital Subscriber Line (DSL) Customer Premises Equipment (CPE) and an Internet Service Provider (ISP) Broadband Remote Access Server (BRAS) via said access-aggregation network.

The Method preferably comprises the steps of: sending a Dynamic Host Control Protocol request (DHCP-request) to the access network by said Customer Premises Equipment (CPE); relaying said DCHP-request to a DHCP-server that serves the access network; receiving a DHCP-reply, that reply containing an IP-address for using IP-signaling in the access network context and an access-server IP-address or an access-server name; andestablishing a Labled Switched Path (LSP) connection between that Broadband Remote Access Server (BRAS) and said Customer Premises Equipment (CPE) by said Customer Premises Equipment (CPE). A control Virtual Connection (cVC) might be used to send the DHCP-request to the access network if ATM is used in the access network.

Said Customer Premises Equipment (CPE) might querie a domain name service (DNS) dedicated to said access aggregation network for an IP-address if said DHCP-message contains an access-server name and subsequently receives an IP-address of said Broadband Remote Access Server (BRAS) between said steps of receiving a DHCP-reply and establishing a Labled Switched Path (LSP). This query is usable only in the access network control plane.

The object of the invention is also achieved by a Digital Subscriber Line Access Multiplexer (DSLAM) for use in a method according to the present invention and a Customer Premises Equipment (CPE) for use in a method according to the present invention.

### Brief description of the drawings

In the following description of a preferred embodiment of the present invention, it is referred to the accompanying drawing wherein:

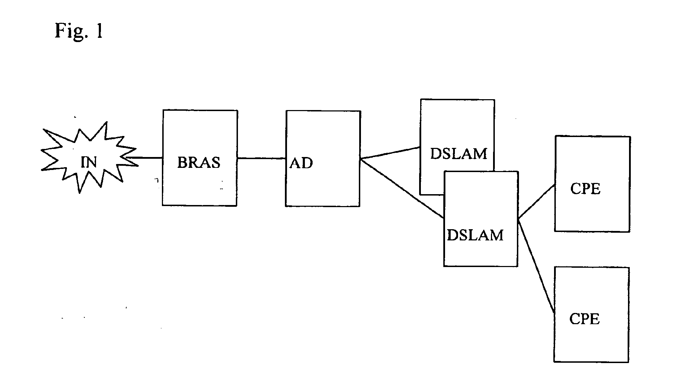

Fig. 1 depicts a sketch of an ADSL aggregation access network topology.

### Detailed Description of the Invention

Fig. 1 shows a typical residential Asymetric Digital Subscriber Line (ADSL) deployment for internet access. The ADSL links from multiple Customer Premises Equipments (CPE) are terminated by a Digital Subscriber Line Access Multiplexer (DSLAM). The traffic of a number of DSLAMs is forwarded to an aggregation device, typically an ATM-switch AD. The switch AD forwards the aggregated traffic to a Broadband Remote Access Server (BRAS). The BRAS performs format conversion, subscriber identification and other functions before forwarding Internet Protocol (IP) traffic to and receiving it from the internet IN.

The connection between DSLAM, AD and BRAS is usually established by an ATM network. Instead of pure ATM, Multi Protocol Lable Switching (MPLS) is used here. When MPLS is used in the Broadband Aggregation Access Network, virtual connections (VC) that connect CPE to a BRAS can be signaled via the MPLS control plane. These virtual connections can still be ATM virtual connections or alternatively MPLS Labled Switched Paths (LSP). For this to be possible the access network needs to be configured as an IP-network at the control plane level of MPLS. New CPE devices can then be auto configured in the access network using IP autoconfiguration protocols which are normally used for other purposes and other contexts, such as DHCP and DNS. The received configuration information is only used to establish a layer 2/2.5 connection, that is a Labled Switched Path in Multi Protocol Lable Switching, to the Broadband Remote Access Server (BRAS). The configuration information will not be used in the later exchanged IP data packets. Such pure privat adress can be used in the access network without any need for IP adress translation. The established Labled Switched Path is seen as a layer 2 connection and the IP configuration information will not be used any more. The IP configuration information needed for the layer 3 IP data plane will be received via traditional means for example via PPP or DHCP from an ISP over the established Multi Protocol Lable Switching - Labled Switched Path.

## Claims

1. Method for auto-configuration of Customer Premises Equipment CPE devices in a digital subscriber line access aggregation network, where the CPE obtains configuration data via IP protocols **characterized in that** the CPE uses said configuration data only to establish a label switched path LSP, that is a layer 2 connection, to a Broadband Remote Access Server BRAS via said access aggregation network.

2. Method according to the preceeding claim, **characterized in that** DHCP or DNS is used as IP auto-configuration protocol.

3. Method according to one of the preceeding claims, **characterised in that** a layer 2 connection is established between a Digital Subscriber Line DSL Customer Premises Equipment CPE and an Internet Service Provider ISP Broadband Remote Access Server BRAS via said access-aggregation network.

4. Method according to one of the preceeding claims **characterised in that** said method comprises the steps of:
4.1 Sending a Dynamic Host Control Protocol request DHCP-request to the access network by said Customer Premises Equipment CPE.
4.2 relaying said DCHP-request to a DHCP-server that serves the access network;
4.3 receiving a DHCP-reply, that reply containing an IP-address for using IP-signaling in the access network context and an access-server IP-address or an access-server name; and
4.4 establishing a Labled Switched Path LSP connection between that Broadband Remote Access Server BRAS and said Customer Premises Equipment CPE by said Customer Premises Equipment CPE.

5. Method according to claim 1, **characterised in that** said Customer Premises Equipment CPE queries a domain name service DNS dedicated to said access aggregation network for an IP-address if said DHCP-message contains an access-server name and subsequently receives an IP-address (usable only in the access network control plane) of said Broadband Remote Access Server BRAS between said steps 4.3 and 4.4.

6. Customer Premises Equipment CPE adapted to perform the method according to one of the preceeding claims.

## Patentansprüche

1. Verfahren zur Autokonfiguration von Teilnehmer-Endgeräten, CPE, in einem Aggregationsnetzwerk mit Zugang über einen digitalen Teilnehmeranschluss, wobei das CPE die Konfiguration über IP-Protokolle erhält, **dadurch gekennzeichnet, dass** das CPE die besagte Konfiguration nur für den Aufbau eines labelvermittelten Pfads, LSP, d.h. einer Schicht 2-Verbindung, zu einem entfernten Breitband-Zugangsserver, BRAS, über das besagte Zugangsaggregationsnetzwerk benutzt.

2. Verfahren nach dem vorstehenden Anspruch, **dadurch gekennzeichnet, dass** DHCP oder DNS als Autokonfigurations-IP-Protokoll benutzt wird.

3. Verfahren nach einem der vorstehenden Ansprüche, **dadurch gekennzeichnet, dass** eine Schicht 2-Verbindung zwischen einem Teilnehmer-Endgerät, CPE, mit digitalem Teilnehmeranschluss, DSL, und einem entfernten Breitband-Zugangsserver, BRAS, eines Internet-Dienstanbieters, ISP, über das besagte Zugangsaggregationsnetzwerk aufgebaut wird.

4. Verfahren nach einem der vorstehenden Ansprüche, **dadurch gekennzeichnet, dass** das besagte Verfahren die folgenden Schritte umfasst:
4.1 Senden einer Dynamic Host Control Protocol-Anforderung, DHCP-Anforderung, an das Zugangsnetzwerk durch das besagte Teilnehmer-Endgerät, CPE;
4.2 Weiterleiten der besagten DCHP-Anforderung an einen DHCP-Server, welcher das Zugangsnetzwerk bedient;
4.3 Empfangen einer DHCP-Antwort, wobei diese Antwort eine IP-Adresse für die IP-Signalisierung in dem Zugangsnetzwerk-Kontext und eine IP-Adresse des Zugangsservers oder einen Zugangsserver-Namen enthält; und
4.4 Aufbauen einer Verbindung über einen labelvermittelten Pfad, LSP-Verbindung, zwischen diesem entfernten Breitband-Zugangsserver, BRAS, und dem besagten Teilnehmer-Endgerät, CPE, durch das besagte Teilnehmer-Endgerät, CPE.

5. Verfahren nach Anspruch 1, **dadurch gekennzeichnet, dass** das besagte Teilnehmer-Endgerät, CPE, einen dem besagten Zugangsaggregationsnetzwerk zugeordneten Domain-Name-Dienst, DNS, nach einer IP-Adresse abfragt, wenn die besagte DHCP-Nachricht einen Zugangsserver-Namen enthält, und anschließend eine IP-Adresse (nur in der Steuerebene des Zugangsnetzwerks verwendbar) des entfernten Breitband-Zugangsservers, BRAS, zwischen den besagten Schritten 4.3 und 4.4 empfängt.

6. Teilnehmer-Endgerät, CPE, dazu ausgelegt, das Verfahren nach einem der vorstehenden Ansprüche auszuführen.

## Revendications

1. Procédé d'auto-configuration de dispositifs de l'équipement des locaux du client, CPE, sur un réseau d'agrégation d'accès de ligne d'abonné numérique, dans lequel le CPE obtient des données de configuration par l'intermédiaire de protocoles IP **caractérisé en ce que** le CPE utilise lesdites données de configuration uniquement pour établir un chemin à commutation d'étiquettes, LSP, qui est une connexion de niveau 2, vers un serveur d'accès à distance à large bande, BRAS, par l'intermédiaire dudit réseau d'agrégation d'accès.

2. Procédé selon la revendication précédente, **caractérisé en ce qu'**un protocole DHCP ou un protocole DNS est utilisé comme protocole IP d'auto-configuration.

3. Procédé selon l'une des revendications précédentes, **caractérisé en ce qu'**une connexion de niveau 2 est établie entre un équipement des locaux du client, CPE, de ligne d'abonné numérique, DSL, et un serveur d'accès à distance à large bande, BRAS, de fournisseur d'accès à Internet, ISP, par l'intermédiaire dudit réseau d'agrégation d'accès.

4. Procédé selon l'une des revendications précédentes **caractérisé en ce que** ledit procédé comprend les étapes suivantes :
4.1 envoyer une requête de protocole de configuration dynamique des hôtes, requête DHCP, au réseau d'accès par ledit équipement des locaux du client, CPE ;
4.2 relayer ladite requête DHCP vers un serveur DHCP qui dessert le réseau d'accès ;
4.3 recevoir une réponse DHCP, cette réponse contenant une adresse IP pour utiliser la signalisation IP dans le contexte de réseau d'accès et une adresse IP de serveur d'accès ou un nom de serveur d'accès ; et
4.4 établir une connexion de chemin à commutation d'étiquettes, LSP, entre ce serveur d'accès à distance à large bande, BRAS, et ledit équipement des locaux du client, CPE, par ledit équipement des locaux du client, CPE.

5. Procédé selon la revendication 1, **caractérisé en ce que** ledit équipement des locaux du client, CPE, interroge un service de nom de domaine, DNS, dédié audit réseau d'agrégation d'accès pour une adresse IP si ledit message DHCP contient un nom de serveur d'accès et reçoit par la suite une adresse IP (utilisable uniquement dans le plan de commande du réseau d'accès) dudit serveur d'accès à distance à large bande, BRAS, entre lesdites étapes 4.3 et 4.4.

6. Équipement des locaux du client, CPE, adapté pour exécuter le procédé selon l'une des revendications précédentes.
